# EUROPÄISCHE PATENTSCHRIFT

(11) **EP 1 721 235 B1**
(45) Veröffentlichungstag und Bekanntmachung des Hinweises auf die Patenterteilung: **08.08.2007**
(21) Anmeldenummer: 05786876.2
(22) Anmeldetag: 29.08.2005
(51) Int. Cl.: G06F 1/00, H04L 29/06, H04L 12/28, H04L 12/18

(54) **KOMMUNIKATIONSSYSTEM UND VERFAHREN ZUR BEREITSTELLUNG EINES MOBILEN KOMMUNIKATIONSDIENSTES**
COMMUNICATION SYSTEM AND METHOD FOR PROVIDING A MOBILE COMMUNICATION SERVICE
SYSTEME DE COMMUNICATION ET PROCEDE POUR METTRE A DISPOSITION UN SERVICE DE COMMUNICATION MOBILE

(30) Priorität: 30.09.2004 DE 102004047692
(43) Veröffentlichungstag der Anmeldung: 15.11.2006
(73) Patentinhaber: SIEMENS AKTIENGESELLSCHAFT, 80333 München (DE)
(72) Erfinder: FARTMANN, Alfons, 85748 Garching (DE); SCHÄFER, Günter, 10551 Berlin (DE); TOTZKE, Jürgen, 85586 Poing (DE); WESTERHOFF, Lars, 13407 Berlin (DE)
(86) Internationale Anmeldenummer: PCT/EP2005/054245
(87) Internationale Veröffentlichungsnummer: WO 2006/034935

(56) Entgegenhaltungen:
- US-A1- 2004 077 350
- US-A1- 2004 087 304
- WESTERHOFF L ET AL: "Security analysis and concept for the multicast-based handover support architecture MOMBASA" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, Bd. 4, 29. November 2004 (2004-11-29), Seiten 2201-2207, XP010757921 ISBN: 0-7803-8794-5

## Beschreibung

Die vorliegende Erfindung betrifft ein Kommunikationssystem und ein Verfahren zur Bereitstellung eines mobilen Kommunikationsdienstes mittels eines Kommunikationsnetzes, das zur Nachrichtenübermittlung auf Basis wenigstens eines Internet-Protokolls eingerichtet ist, und mittels eines Zugangsnetzwerkes für mobile Rechner, innerhalb dessen eine Nachricht unter Verwendung eines Multicasting-Prozesses übermittelt wird.

Bestehende Kommunikationssysteme zur Bereitstellung eines mobilen Telekommunikationsdienstes verwenden zum Teil ein Kommunikationsnetz, das zur Nachrichtenübermittlung auf Basis wenigstens eines Internet-Protokolls eingerichtet ist. Hierbei ist es bislang jedoch üblich, die internet-protokollbasierte Kommunikation nur innerhalb eines Kernnetzwerkes zu verwenden, so dass es weiterhin notwendig ist, zur Bereitstellung von mobilen Kommunikationsdiensten speziell dafür zugeschnittene Kommunikationsprotokolle zu verwenden. Ein Kommunikationsnetzwerk, das auf Basis eines Internet-Protokolls arbeitet, gestattet einen netzüberschreitenden paketorientierten Datenaustausch zwischen Endsystemen des Kommunikationssystems. Damit wird ein Kommunikationsprotokoll bereitgestellt, das eine netzüberschreitende Nachrichtenübertragung zwischen geographisch verteilten Rechnern verschiedener Netze ermöglicht.

Ein solches Kommunikationssystem wird beispielsweise in US 2004/0087304 offenbart.

Durch die so genannte Internet Engineering Task Force (IETF) wurde eine Spezifikation vorgestellt, die mobile Telekommunikationsdienste im Internet ermöglicht. Ausgangspunkt für die Spezifikation des vorgestellten Konzepts "Mobile IP" waren in erster Linie die Unzulänglichkeiten eines herkömmlichen Internet-Protokolls (IP) hinsichtlich der Mobilität. "Mobile IP" stellt eine Lösung für Mobilität im Internet zur Verfügung, die skalierbar, robust und sicher ist. Insbesondere werden Mechanismen für das so genannte Routing von IP-Paketen zu mobilen Rechnern zur Verfügung gestellt, die sich in einem fremden Netz aufhalten können, während sie ihre permanente IP-Adresse beibehalten. Ein Problem von "Mobile IP" ist, dass das Basiskonzept nicht geeignet ist für die Unterstützung der automatischen Nachführung einer bestehenden Nutzdatenverbindung, das so genannte "Seamless Handover".

Insbesondere in A. Festag, L. Westerhoff and A. Wolisz. The MOMBASA Software Environment - A Toolkit for Performance Evaluation of Multicast-Based Mobility Support. In Proc. Of Performance Tools 2002, pages 212-219, London, GB, April 2002 wird eine Architektur für ein Kommunikationssystem mit Namen "MOMBASA" vorgestellt, das auf Basis des Internet-Protokolls arbeitet. Bei diesem Kommunikationssystem arbeitet ein Zugangsnetzwerk für einen mobilen Rechner unter Verwendung eines Multicasting-Prozesses, um die einzelnen Nachrichten zu übermitteln. Bei der Punkt-zu-Mehrpunkt-Kommunikation ist Multicasting ein Prozess, bei dem eine Nachricht in einem Übertragungsvorgang mit einer so genannten Gruppenadresse an eine festgelegte Gruppe bzw. Klasse von Empfängern übermittelt wird.

Eine Infrastruktur des MOMBASA-Kommunikationssystems sieht als Kommunikationselemente folgende Komponenten vor: im Zugangsnetzwerk für den mobilen Rechner sind mehrere Zugangspunkte mit einem jeweiligen Zugangspunkt-Verbindungsrechner (so genannten Mobility-Enabling Proxies) vorgesehen, die über multicasting-fähige Router miteinander verbunden sind. Ein Netzwerkverbindungs-Rechner, beispielsweise in Form eines Gateways, dient zur Verbindung des Zugangsnetzwerks und des öffentlichen oder privaten, fixen Internet-Netzwerks. Durch die mobilen Rechner werden so genannte Mobilitätsagenten (Mobile oder Mobility Agents) ausgeführt, welche eine Netzinstanz repräsentieren, die für die so genannte Mobilitätsunterstützung der mobilen Rechner in einzelnen Sub-Netzen eingesetzt wird.

Ein mobiler Rechner muss in der Lage sein, auch nach dem Wechsel des Zugangspunktes zum Internet mit anderen Rechnern zu kommunizieren. Zu diesem Zweck wird mobilen Rechnern, wenigstens für die Dauer ihres Aufenthalts innerhalb eines Zugangsnetzwerks, eine global erreichbare IP-Adresse zugeordnet, welche im Adressbereich des Zugangsnetzwerks liegt. Folglich werden alle Nachrichtenpakete vom öffentlichen Internet-Netzwerk, die an den mobilen Rechner adressiert sind, über das normale Internet-Routing an den Netzwerkverbindungs-Rechner zur Verbindung mit dem Zugangsnetzwerk gesendet. Ein Block von Unicasting-Adressen mehrerer mobiler Rechner wird einem Block von Multicasting-Gruppen innerhalb des Zugangsnetzwerks zugeordnet. Wenn sich ein mobiler Rechner an einem Zugangspunkt-Verbindungsrechner registriert, wird dieser Zugangspunkt-Verbindungsrechner Teil einer zugeordneten Multicasting-Gruppe. An dem Netzwerkverbindungs-Rechner zur Verbindung des Zugangsnetzwerks und des Internet-Netzes wird ein Nachrichtenpaket für einen mobilen Rechner an eine festgelegte Gruppe von Zugangspunkten übermittelt und vom zugeordneten Zugangspunkt an den mobilen Rechner.

Die Verwendung eines Multicasting-Prozesses innerhalb des Zugangsnetzwerks erleichtert den Prozess der voraussagenden Nachführung einer bestehenden Netzdatenverbindung zwischen zwei Zugangspunkten. Ausgehend von dem Zugangspunkt-Verbindungsrechner, an dem der mobile Rechner direkt registriert ist, werden benachbarte Zugangspunkt-Verbindungsrechner Teil einer Multicasting-Gruppe. Diese speichern Daten in einem so genannten Ring-Puffer, wobei bei einer Nachführung einer bestehenden Nutzdatenverbindung, dem so genannten Handover, die zurückliegend empfangenen Nachrichten im Ring-Puffer an den mobilen Rechner weitergeleitet werden, um einen Verlust von Nachrichten während des Handover zu kompensieren.

Für den Fall, dass ein mobiler Rechner für eine bestimmte Zeitdauer weder Daten empfängt noch sendet, schaltet der mobile Rechner in den so genannten Idle-Modus. Dieser repräsentiert einen Betriebszustand, in dem der mobile Rechner zwar eingeschaltet ist, sich aber noch nicht eingebucht hat und damit vom Zugangsnetzwerk aus noch nicht erreichbar ist. In diesem Fall wird eine betreffende Multicasting-Gruppe abgebaut, und die Position eines mobilen Rechners ist nur rudimentär bekannt als ein so genanntes Paging-Gebiet, repräsentiert durch eine permanente Multicasting-Gruppe, welche unabhängig vom mobilen Rechner ist. Wenn Nachrichten für einen mobilen Rechner, der sich im Idle-Zustand befindet, an dem Netzwerk-Verbindungsrechner empfangen werden, wird eine Paging-Anforderung (so genannter Paging Request) an eine festgelegte Multicasting-Gruppe des zuletzt bekannten Paging-Gebiets des mobilen Rechners übermittelt und zu den zuletzt angesprochenen Zugangspunkt-Verbindungsrechnern dieses Paging-Gebiets weitergeleitet, wodurch der mobile Rechner in den aktiven Zustand versetzt wird und sich in das Zugangsnetzwerk einbucht.

Ein solches Kommunikationssystem ist einer Reihe von Sicherheitsbedrohungen ausgesetzt, welche den Betrieb des mobilen Telekommunikationsdienstes gefährden. Zum einen kann der interne Nachrichtenaustausch im Zugangsnetzwerk durch externe Angriffe von externen Links gefährdet sein. Weiterhin kann der interne Nachrichtenaustausch im Zugangsnetzwerk durch einen Angreifer benutzt werden, der Zugang zum Zugangsnetzwerk auf verschiedene Weise erlangen kann. Weiterhin können von einem Angreifer Nachrichten oder Informationen während ihrer Übermittlung abgehört oder manipuliert werden, wenn der Angreifer vorgibt, ein legitimierter Nutzer des Zugangsnetzwerks zu sein. Das könnte der Angreifer weiterhin dazu nutzen, einen Telekommunikations-Service auf Kosten eines personifizierten mobilen Rechners in Anspruch zu nehmen.

Im allgemeinen weiß ein mobiler Rechner nicht im vorhinein, welcher der Zugangspunkte im Zugangsnetzwerk für ihn zuständig ist. Aus diesem Grund können gefälschte so genannte Advertisements, d.h. Nachrichten, mit denen Mobilitätsagenten dem mobilen Rechner ihre Dienste anbieten, die über den zuletzt benutzten Zugangspunkt produziert werden, dazu führen, dass sich der mobile Rechner irrtümlich bei einem Angreifer registriert. Dabei ist das Problem folgendes: die so genannten MEP Advertisements (Mobility-Enabling Proxies Advertisements) sind nicht für einen einzelnen mobilen Rechner bestimmt, sondern für eine Gruppe von mobilen Rechnern. Für den Fall der Verwendung einer symmetrischen Verschlüsselung würde es jedem involvierten mobilen Rechner ermöglicht, selbst gefälschte Advertisments zu produzieren. Würde dagegen ein Verfahren zur asymetrischen Kryptografie verwendet werden, würde dies bedeuten, dass Überprüfungswerte von heute mehreren Hundert bis zu 2048 Bits benutzt werden müssten. Jedoch könnte ein falscher Zugangspunkt potentiell immer noch später entlarvt werden während des Registrierungsprozesses, wenn der mobile Rechner und der Zugangspunkt direkt miteinander kommunizieren.

Als weitere Bedrohung sind so genannte Denial-Of-Service Attacks zu nennen. Hierbei bedeutet Denial-Of-Service soviel wie Funktionsausfall oder Funktionsverweigerung. Dahinter verbirgt sich eine Vielzahl verschiedener Angriffsmöglichkeiten, die alle das Ziel haben, bestimmte Rechner zum Absturz zu bringen oder in bestimmten Funktionen lahm zu legen. Solche Angriffe können vom zuletzt benutzen Zugangspunkt aus gegen einen Authentifizierungs-Prozess selbst gerichtet werden zu einer Zeit, in der die Authentifizierung der Identität des Datenübergabepunkts (so genannte Peer Node) nicht garantiert werden kann. Weiterhin können Denial-Of-Service Attacks vom Internet aus durchgeführt werden mittels Verwendung von Datenpaketen. Werden Datenpakete zu mehreren mobilen Rechnern im Idle-Zustand geschickt (beispielsweise mit variierenden Quellen und Protokollen), werden diese gleichzeitig durch eine Paging-Anforderung angesprochen und veranlasst, in den aktiven Zustand zu wechseln. Dies führt zu einer Signal-Überlast innerhalb des Zugangsnetzwerks und an einem Berechtigungs-Überprüfungsrechner zur Durchführung von Authentifikation, Authorisierung und Accounting (so genannter AAA-Server).

Der vorliegenden Erfindung liegt die Aufgabe zugrunde, ein Kommunikationssystem und ein Verfahren zur Bereitstellung eines mobilen Telekommunikationsdienstes der eingangs genannten Art anzugeben, mit denen geeignete Vorkehrungen gegen solche Sicherheitsbedrohungen getroffen werden können und die weiterhin für eine automatische Nachführung einer bestehenden Nutzdatenverbindung geeignet sind.

Diese Aufgabe wird gelöst durch ein Kommunikationssystem zur Bereitstellung eines mobilen Telekommunikationsdienstes gemäß Patentanspruch 1 und durch ein Verfahren zur Bereitstellung eines mobilen Telekommunikationsdienstes gemäß Patentanspruch 8.

Das Kommunikationssystem zur Bereitstellung eines mobilen Telekommunikationsdienstes gemäß der Erfindung weist mehrere Kommunikationselemente auf: ein Kommunikationsnetz ist zur Nachrichtenübermittlung auf Basis wenigstens eines Internet-Protokolls eingerichtet. Weiterhin ist wenigstens ein mobiler Rechner vorgesehen sowie ein Zugangsnetzwerk für den mobilen Rechner, bei dem Nachrichten unter Verwendung eines Multicasting-Prozesses übermittelt werden. Ein Netzwerkverbindungs-Rechner dient zur Verbindung des Zugangsnetzwerks und des Kommunikationsnetzes. Im Zugangsnetzwerk sind mehrere Zugangspunkte mit jeweiligen Zugangspunkt-Verbindungsrechnern vorgesehen, welche jeweils dazu eingerichtet sind, eine Kommunikationsverbindung zwischen wechselnden Zugangspunkten und dem mobilen Rechner herstellen zu können. Ein Berechtigungsüberprüfungs-Rechner dient zur Einrichtung und Verwaltung von Vertrauensbeziehungen zwischen mehreren der Kommunikationselemente. Der Netzwerkverbindungs-Rechner und die Zugangspunkt-Verbindungsrechner sind dazu eingerichtet, beim Empfang und Versenden von Nachrichten ein Paketfilter-Verfahren zum sicherheitsbezogenen Schutz des Kommunikationssystems durchzuführen. Weiterhin sind der Netzwerkverbindungs-Rechner und der Berechtigungsüberprüfungs-Rechner dazu eingerichtet, ein Verfahren zur Überlastkontrolle durch Bereitstellung eines Kommunikationsprotokolls für die Kommunikationselemente durchzuführen, um einen Funktionsausfall eines der Kommunikationselemente infolge eines Angriffs zu verhindern.

Gemäß der Erfindung wird also beim Empfang und Versenden von Nachrichten ein Paketfilter-Verfahren zum sicherheitsbezogenen Schutz des Kommunikationssystems an den Grenzen des Zugangsnetzwerks durchgeführt. Weiterhin werden Vertrauensbeziehungen zwischen mehreren Kommunikationselementen des Kommunikationssystems eingerichtet und verwaltet und außerdem eine Überlastkontrolle durch Bereitstellung eines Kommunikationsprotokolls für die Kommunikationselemente des Kommunikationssystems durchgeführt, um einen Funktionsausfall eines der Kommunikationselemente infolge eines Angriffs zu verhindern. Dabei bietet die Kombination dieser unterschiedlichen Techniken insbesondere folgende Vorteile: mit dem Paketfilter-Verfahren zum sicherheitsbezogenen Schutz des Kommunikationssystems an den Grenzen des Zugangsnetzwerks kann ein interner Nachrichtenaustausch im Zugangsnetzwerk vor externen Angriffen geschützt werden. Mit der Überlastkontrolle können vor allem Denial-Of-Service Attacks gegen den Berechtigungsüberprüfungs-Rechner und den Netzwerkverbindungs-Rechner abgewehrt werden. Insbesondere wird hierbei das Verfahren zur Überlastkontrolle bei einem anfänglichen Registrierungsprozess des mobilen Rechners und/oder bei der Durchführung oder Aktualisierung von Paging-Diensten durchgeführt. Diese Operationen müssen über den Berechtigungsüberprüfungs-Rechner oder den Netzwerkverbindungs-Rechner durchgeführt werden. Die Überlastkontrolle (so genannte Rate-based Congestion Control) kann mit einer Linux Netzfilterarchitektur realisiert werden, so dass sie in hohem Maße mit dem Paketfilter-Verfahren integriert werden kann. Das Verfahren zur Überlastkontrolle kann auch auf mehreren Ebenen durchgeführt werden, insbesondere dezentral auf einer Ebene von geographischen Zellen und zentral auf einer Ebene der gesamten Netzlast. Dadurch kann ein negativer Effekt des Verfahrens zur Überlastkontrolle für legitimierte Benutzer des Kommunikationssystems auf ein Minimum reduziert werden.

Gemäß einer weiteren vorteilhaften Ausführungsform der Erfindung wird mittels einer Schlüsselverteilung an benachbarte Kommunikationselemente eines Zugangspunktes des Zugangsnetzes einem weiteren Zugangspunkt ermöglicht, eine lokale Authentifikation eines mobilen Rechners bei der automatischen Nachführung einer bestehenden Nutzdatenverbindung durchzuführen. Dadurch wird ein Signalstrom zu einem zentralen Berechtigungsüberprüfungs-Rechner vermieden, gleichzeitig ist der Zuwachs einer Handover-Latenz infolge des Authentifikations-Prozesses minimal. Durch das dezentralisierte Handling von Handover-Prozessen werden Denial-Of-Service Attacks gegen den Berechtigungsüberprüfungs-Rechner vermieden bzw. abgewehrt, ohne einen legitimierten Nutzer zu beeinträchtigen.

Zusammenfassend wird mit der Erfindung in einem Kommunikationssystem der eingangs genannten Art ein wirksamer Schutz gegen Sicherheitsbedrohungen zur Verfügung gestellt, ohne eine Handover-Latenz signifikant zu erhöhen. Ein negativer Effekt der Überlastkontrolle für legitimierte Benutzer wird minimiert.

Betreffend die Implementierung des Paketfilter-Verfahrens sieht eine vorteilhafte Ausführungsform der Erfindung vor, dass der Netzwerkverbindungs-Rechner und die Zugangspunkt-Verbindungsrechner dazu eingerichtet sind, ein Paketfilter-Verfahren durchzuführen, um eine vorbestimmte Klasse von Angriffen mit mutwillig veränderten Quelladressen abzuwehren. Hierbei ist zu berücksichtigen, dass Quelladressen eines mobilen Rechners nur aus der Richtung des drahtlosen Links auftreten dürfen, Quelladressen von nicht-mobilen und von Kommunikationselementen, die nicht zum Zugangsnetzwerk gehören, dürfen nur über den Netzwerkverbindungs-Rechner übermittelt werden.

Weitere vorteilhafte Aus- und Weiterbildungen der Erfindung sind in Unteransprüchen angegeben.

Die Erfindung wird im folgenden anhand der in der Zeichnung dargestellten Figuren, die vorteilhafte Ausführungsformen zur vorliegenden Erfindung darstellen, näher erläutert.

Es zeigen:
- Fig. 1: ein Übersichtsschema einer grundlegenden Struktur eines MOMBASA-Kommunikationssystems;
- Fig. 2: eine weitere schematisierte Darstellung eines derartigen Kommunikationssystems zur Darstellung von Vertrauensbeziehungen zwischen den einzelnen Kommunikationselementen;
- Fig. 3: den anfänglichen Registrierungsprozess eines mobilen Rechners an ein Kommunikationssystem gemäß der Erfindung;
- Fig. 4: einen beispielhaften Handover-Prozess eines mobilen Rechners beim Wechsel zwischen verschiedenen Zugangspunkten;
- Fig. 5: ein Schalten des mobilen Rechners in den inaktiven Zustand und einen Paging-Update-Prozess;
- Fig. 6: einen beispielhaften Paging-Prozess; und
- Fig. 7: eine beispielhafte Tabelle zur Filterung von Denial-Of-Service Attacks an einem Netzwerkverbindungs-Rechner.

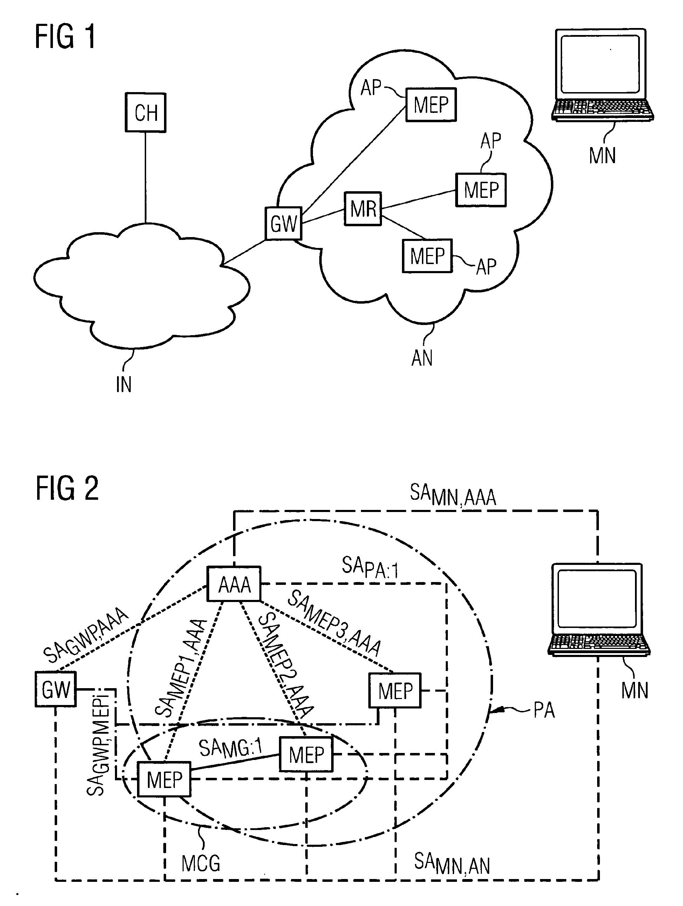

In Fig. 1 ist eine beispielhafte Architektur eines MOMBASA-Kommunikationssystems gezeigt, das mehrere Kommunikationselemente aufweist. Ein Kommunikationsnetz IN dient zur Nachrichtenübermittlung auf Basis wenigstens eines Internet-Protokolls, ist also insbesondere als Internet-Netzwerk ausgeführt. Weiterhin ist ein Zugangsnetzwerk AN für einen mobilen Rechner MN vorgesehen, bei dem Nachrichten unter Verwendung eines Multicasting-Prozesses übermittelt werden. Bei der Punkt-zu-Mehrpunkt-Kommunikation ist Multicasting ein Prozess, bei dem eine Nachricht in einem Übertragungsvorgang mit einer Gruppenadresse an eine festgelegte Gruppe oder Klasse von Empfängern übermittelt wird. Im Zugangsnetzwerk AN sind mehrere Zugangspunkte AP mit einem jeweiligen Zugangspunkt-Verbindungsrechner MEP vorgesehen, so genannte Mobility-Enabling Proxies, welche jeweils dazu eingerichtet sind, eine Kommunikationsverbindung zwischen wechselnden Zugangspunkten AP und dem mobilen Rechner MN herstellen zu können. Ein Netzwerkverbindungs-Rechner GW in Form eines Gateways dient zur Verbindung des Zugangsnetzwerks AN und des Internet-Netzwerks IN. Für eine Kommunikationsverbindung zwischen zwei Endgeräten wird beispielsweise eine Verbindung zwischen dem Korrespondenz-Rechner CH und dem mobilen Rechner MN über das Internet-Netzwerk IN und das Zugangsnetzwerk AN hergestellt. Zwei der Zugangspunkte AP mit zugehörigen Zugangspunkt-Verbindungsrechnern MEP sind über einen Multicast-Router MR miteinander verbunden. Zum Aufbau einer Kommunikationsverbindung werden durch den mobilen Rechner MN Mobilitätsagenten ausgeführt, die zur Mobilitätsunterstützung des mobilen Rechners MN beim Wechsel von Zugangspunkten eingesetzt werden.

Gemäß der Erfindung sind der Netzwerkverbindungs-Rechner GW und die Zugangspunkt-Verbindungsrechner MEP dazu eingerichtet, beim Empfang und Versenden von Nachrichten ein Paketfilter-Verfahren zum sicherheitsbezogenen Schutz des Kommunikationssystems durchzuführen. Insbesondere wird das Paketfilter-Verfahren durchgeführt, um eine vorbestimmte Klasse von Angriffen mit mutwillig veränderten Quelladressen abzuwehren. Hierbei ist zu berücksichtigen, dass Quelladressen von mobilen Rechnern nur aus der Richtung des drahtlosen Links auftreten dürfen, Quelladressen hingegen von nicht-mobilen Kommunikationselementen und von Kommunikationselementen, die nicht Teil des Zugangsnetzwerks sind, werden nur über den Netzwerkverbindungs-Rechner GW übertragen.

Am Netzwerkverbindungs-Rechner GW sollten Nachrichten des drahtlosen Links und Paging-Anforderungen verworfen werden, es sei denn, sie stammen vom Netzwerkverbindungs-Rechner GW selbst. Falls eine Nachricht aus dem Internet-Netzwerk ankommt, sollte sie verworfen werden, wenn sie eine Quelladresse eines mobilen Rechners oder des Zugangsnetzwerks enthält oder eine MOMBASA-interne Nachricht darstellt oder eine Nachricht nach dem Internet Group Management Protocol (IGMP) oder nach dem Protocol Independent Multicast-Sparse Mode (PIM-SM) darstellt, die eine Multicasting-Adresse bezeichnet, welche intern durch das Zugangsnetzwerk benutzt wird. An den Zugangspunkten AP sollten die folgenden Nachrichtenpakete verworfen werden, wenn sie vom drahtlosen Link stammen: jedes Nachrichtenpaket, das eine Quelladresse eines nicht-mobilen Kommunikationselements bezeichnet, Inter-MEP-Advertisements, Paging-Anforderungen, Aktualisierung von Paging-Diensten (Paging Updates) und jede IGMP- oder PIM-SM-basierte Nachricht, die eine Multicasting-Adresse bezeichnet, die intern von dem Zugangsnetzwerk benutzt wird. Nachrichten vom drahtlosen Link sollten verworfen werden, wenn sie am Upstream-Interface ankommen.

Die folgenden Nachrichtenpakete sollten nur durch einen Zugangspunkt erzeugt werden, jedoch nicht durch diesen weitergeleitet werden, d.h. sie sollten verworfen werden, falls sie an einem eingangsseitigen Interface ankommen: Advertisements von Zugangspunkt-Verbindungsrechnern MEP, Antworten auf Mitteilungsübermittlungen bezüglich des Registrierungsprozesses (MH Registration Response, MH: Message Handling), IGMP Member-ship Reports und IGMP Leave Groups.

Das Paketfilter-Verfahren ist dabei eine relativ einfache Realisierungsvariante eines Firewalls zum Schutz des Kommunikationssystems. Dabei ist das Paketfilter-Verfahren nicht dazu bestimmt, den mobilen Rechner gegen Angriffe zu schützen, sondern nur dazu vorgesehen, den internen Nachrichtenaustausch im Zugangsnetzwerk vor externen Angriffen zu schützen.

In Fig. 2 ist eine weitere Darstellung gezeigt, nach der im Kommunikationssystem gemäß der Erfindung weiterhin ein Berechtigungsüberprüfungs-Rechner in Form eines AAA-Servers vorgesehen ist. Dieser repräsentiert einen multifunktionalen Kommunikations-Server zur Bereitstellung von Diensten zur Authentifizierung von Personen bzw. Benutzern, zur Prüfung der Zugangsberechtigung dieser Personen zu bestimmten Anwendungen und Resourcen (Autorisierung) sowie zur Protokollierung der Aktivitäten (Accounting) dieser Personen. Erfindungsgemäß wird also ein Vertrauensmodell eingeführt, um Telekommunikationsdienste nur für legitimierte Benutzer anzubieten. Zu diesem Zweck werden die mobilen Rechner authentifiziert und autorisiert, wenn sie den von ihnen angeforderten Service-Level benutzen wollen. Nachrichtenübermittlungen müssen dabei gegen Fälschungen und Manipulationen gesichert werden, sicherheitskritische Inhalte zusätzlich gegen das Abhören beispielsweise in Form eines "Lauschangriffs".

Zu diesem Zweck wird eine Sicherheits-Architektur eingesetzt, die insbesondere ein Verfahren zur symmetrischen Kryptografie anwendet, beispielsweise mittels so genannter kryptografischer Hash-Funktionen und symmetrische Verschlüsselung. Bei der symmetrischen Verschlüsselung wird eine Nachricht einer Verschlüsselungsoperation unterzogen. Hierbei ist neben der Nachricht selbst der Schlüssel eine weitere Eingangsgröße der Verschlüsselungsoperation. Die verschlüsselte Nachricht (Kryptogramm) kann über einen unsicheren Kanal gesendet und auf der Empfängerseite wieder unter Zuhilfenahme des Schlüssels entschlüsselt werden. Damit dieser Prozess reversibel ist, müssen Sender und Empfänger sich unter anderem auf einen Schlüssel einigen, der vor der Betriebsaufnahme über einen sicheren Kanal ausgetauscht werden muss.

Die Sicherheits-Architektur der vorliegenden Erfindung unterscheidet zwischen permanenten und temporären Vertrauensbeziehungen. Hierbei wird über den Berechtigungsüberprüfungs-Rechner AAA zumindest eine der folgenden permanenten Vertrauensbeziehungen eingerichtet und verwaltet:
- Vertrauensbeziehungen SA_{MEP:i,AAA} zwischen jedem der Zugangspunkt-Verbindungsrechner MEP und dem Berechtigungsüberprüfungs-Rechner AAA,
- Vertrauensbeziehungen SA_{GWP,AAA} zwischen dem Netzwerkverbindungs-Rechner GW und dem Berechtigungsüberprüfungs-Rechner AAA,
- Vertrauensbeziehungen SA_{GWP,MEP:i} zwischen dem Netzwerkverbindungs-Rechner GW und jedem der Zugangspunkt-Verbindungsrechner MEP,
- Vertrauensbeziehungen SA_{MG:i} zwischen Zugangspunkt-Verbindungsrechnern MEP einer Gruppe MCG von Zugangspunkt-Verbindungsrechnern MEP,
- Vertrauensbeziehungen SA_{PA:i} zwischen Kommunikationselementen in einem Netzwerkgebiet PA (Paging Area) eingerichtet zum Empfang eines einheitlichen Paging-Dienstes.

Hierbei sind die Vertrauensbeziehungen SA_{MG:i} nur den Mitgliedern einer jeweiligen Gruppe MCG und die Vertrauensbeziehungen SA_{PA:i} nur den Mitgliedern innerhalb einer Paging Area PA:ᵢ bekannt.

Weiterhin wird durch den Berechtigungsüberprüfungs-Rechner AAA eine permanente Vertrauensbeziehung SA_{MN:i,AAA} zwischen dem Berechtigungsüberprüfungs-Rechner AAA und dem mobilen Rechner MN eingerichtet und verwaltet. Dies geschieht für jeden mobilen Rechner, der beim Zugangsnetzwerk AN angemeldet ist. Bei der anfänglichen Registrierung des mobilen Rechners MN wird durch den Berechtigungsüberprüfungs-Rechner AAA eine temporäre Vertrauensbeziehung SA_{MN:i,AN} zwischen dem mobilen Rechner MN und zumindest einer der Kommunikationselemente MEP, GW des Zugangsnetzes AN eingerichtet und verwaltet. Für externe Benutzer kann der lokale AAA-Server andere AAA-Server anderer Kommunikationsnetze kontaktieren, um eine jeweilige Vertrauensbeziehung aufzubauen.

Im folgenden werden unterschiedliche Schritte bei der Besicherung von Protokoll-Operationen innerhalb eines MOMBASA-Kommunikationssystems näher beschrieben.

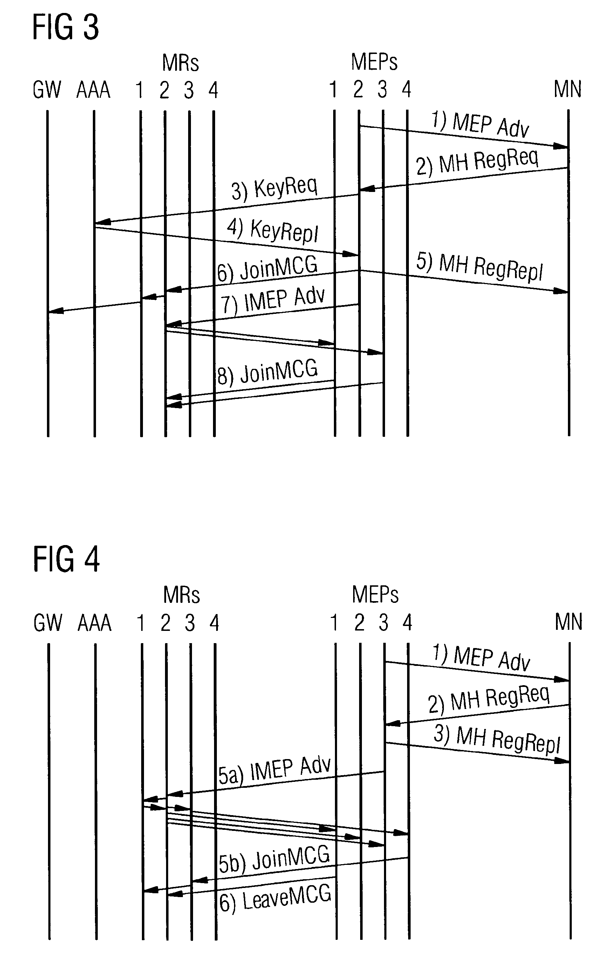

Wenn ein mobiler Rechner eine anfängliche Registrierung an einem Zugangsnetzwerk eines MOMBASA-Kommunikationssystems durchführt, wird eine Nachrichtensequenz für diese Operation durchgeführt, wie beispielhaft anhand von Fig. 3 verdeutlicht.

In einem ersten Schritt senden die Zugangspunkt-Verbindungsrechner MEP reguläre Advertisement-Nachrichten nach einem so genannten Challenge/Response-Mechanismus. Es handelt sich dabei um ein Verfahren zur Authentifikation, das mit symmetrischen und asymmetrischen Verschlüsselungsalgorithmen durchgeführt werden kann. Bei dem Verfahren bekommt die zu authentifizierende Partei von der authentisierenden Partei eine beliebige Zahl, die so genannte Challenge, übermittelt. Die zu authentifizierende Partei berücksichtigt diese Challenge bei der Berechnung ihres Authentifizierungswertes des übermittelten MH Registration Request, um so genannte Replay-Angriffe zu verhindern. Ein Replay-Angriff ist ein aktiver Angriff, bei dem der Angreifer die bei einer früheren Session gewonnenen Daten zu einem späteren Zeitpunkt wieder in ein System einspielt, um an die gewünschten Information zu gelangen. Ohne den Challenge/Response-Mechanismus würde es für einen Angreifer ermöglicht werden, gültige, d.h. authentifizierte, MH Registration Requests auszuspionieren und sie bei einem anderen Zugangspunkt-Verbindungsrechner oder zu einer späteren Zeit wieder einzuspielen. Mit dem Challenge/Response-Mechanismus hingegen kann ein Angreifer den MH Registration Request nur an demselben Zugangspunkt-Verbindungsrecher MEP wieder einspielen wie der legitimierte mobile Rechner, und das nur innerhalb einer kurzen Zeitspanne, in der er im Effekt den Request anstelle des legitimierten Benutzers wiederholt. Schritt eins wird in Fig. 3 anhand von "MEP Adv" repräsentiert.

In einem zweiten Schritt sendet der mobile Rechner einen MH Registration Request, der die letzte Challenge beinhaltet, die in einem MEP Advertisement aufgenommen wurde und mit der Vertrauensbeziehung SA_{MN:i,AAA} authentifiziert wurde (MH RegReq) .

In einem dritten Schritt (KeyReq) überprüft ein Zugangspunkt-Verbindungsrechner MEP die Gültigkeit der Challenge. Jedoch kann der Zugangspunkt-Verbindungsrechner MEP nicht festellen, ob die Nachricht durch einen Angreifer modifiziert wurde. Der Zugangspunkt-Verbindungsrechner MEP sendet einen Key Request zur Anforderung eines Schlüssels an den AAA-Server, welche die Originalanforderung und zusätzliche Veränderungen zu den angeforderten Parametern beinhaltet (beispielsweise limitierte Lebenszeit als Folge eines lokalen Grundsatzes). Die Nachricht wird authentifiziert mit der Vertrauensbeziehung SA_{MEP:i,AAA}.

In einem vierten Schritt (KeyRepl) überprüft der Berechtigungsüberprüfungs-Rechner AAA den Nachrichtenauthentifizierungscode MAC (Message Authentication Code) der von dem mobilen Rechner stammenden Nachricht und den Message Authentication Code MAC, der von dem Zugangspunkt-Verbindungsrechner MEP für die ganze Nachricht erzeugt wurde, und verifiziert, dass der angeforderte Telekommunikationsservice für den mobilen Rechner erlaubt ist entsprechend seinem Profil. Der Berechtigungsüberprüfungs-Rechner AAA kreiert die Session-Vertrauensbeziehung SA_{MN:i,AN}, verschlüsselt den Session-Schlüssel mit der Vertrauensbeziehung SA_{MEP:i,AAA}und erzeugt den MH Registration Response authentifiziert mit der Vertrauensbeziehung SA_{MN:i,AAA}, der den Session-Schlüssel verschlüsselt für den mobilen Rechner enthält. Der MH Registration Response wird an den anfordernden Zugangspunkt-Verbindungsrechner MEP zurückgesandt.

In einem fünften Schritt (MH RegRepl) übermittelt der Zugangspunkt-Verbindungsrechner MEP den MH Registration Response, der in dem Key Response enthalten war, entschlüsselt den Session-Schlüssel und bucht den mobilen Rechner in seine Datenbank ein.

In einem sechsten Schritt (JoinMCG) wird der Zugangspunkt-Verbindungsrechner MEP Teil der Multicasting-Gruppe MCG, die mit dem mobilen Rechner assoziiert ist, und richtet eine Nachrichtenübermittlung für den mobilen Rechner ein.

In einem siebten Schritt fügt der Zugangspunkt-Verbindungsrechner MEP den mobilen Rechner sowie dessen Service-Klasse und seinen Session-Schlüssel, verschlüsselt über die Vertrauensbeziehung SA_{MG:i}, in das nächste Advertisement zwischen den Zugangspunkt-Verbindungsrechnern MEP ein, die zu der benachbarten MEP Multicasting-Gruppe gesendet wurde (IMEP Adv).

In einem achten Schritt (JoinMCG) erzeugen die benachbarten Zugangspunkt-Verbindungsrechner MEP einen Datenbankeintrag des mobilen Rechners enthaltend die Vertrauensbeziehung SA_{MN:i,AN}, wenn sie das Inter-MEP Advertisement empfangen, werden Teil der Multicasting-Gruppe, die mit dem mobilen Rechner assoziiert ist, und beginnen den Nachrichtentransfer für den mobilen Rechner zu puffern.

Das Sichern der Nachrichten mit einem Message-Authentication Code MAC stellt sicher, dass nur legitimierte Benutzer einen Telekommunikationsdienst empfangen und dass Nachrichten nicht modifiziert werden können, ohne dass dies detektiert wird. Das Verschlüsseln von sicherheitskritischen Informationen und die Verwendung von Message Authentication Codes innerhalb des Zugangsnetzwerks schützt gegen Angreifer, die in der Lage sind, einen Link im internen Zugangsnetzwerk abzuhören, wenn sie nicht in der Lage sind, einen Zugangsnetzwerkknoten zu beeinträchtigen.

Im folgenden wird anhand von Fig. 4 ein Handover-Prozess zu einem neuen Zugangspunkt-Verbindungsrechner MEP näher erläutert.

In einem ersten Schritt wird die Notwendigkeit für einen Handover durch den mobilen Rechner festgestellt, indem MEP Advertisements von einem neuen Zugangspunkt-Verbindungsrechner MEP empfangen werden (MEP Adv).

In einem zweiten Schritt (MH RegReq) sendet der mobile Rechner einen MH Registration Request mit der letzten Challenge, die in einem MEP Advertisement aufgezeichnet wurde. Nachdem bereits eine Session in dem Zugangsnetzwerk eingerichtet ist, wird die Nachricht mit der Vertrauensbeziehung SA_{MN:i,AN} authentifiziert.

In einem dritten Schritt (MH RegRepl) wird folgendes durchgeführt: normalerweise ist der neue Zugangspunkt-Verbindungsrechner MEP einer der benachbarten MEPs des alten Zugangspunkt-Verbindungsrechners MEP und ist deshalb bereits im Besitz des Session-Schlüssels des ankommenden mobilen Rechners. Dadurch kann der neue MEP den Message Authentication Code MAC lokal überprüfen und einen MH Registration Response generieren, der mit der Vertrauensbeziehung SA_{MN:i,AN} signiert ist. Falls der neue Zugangspunkt-Verbindungsrechner MEP keinen Eintrag für den ankommenden mobilen Rechner aufweist, wird dem mobilen Rechner ein Fehler angezeigt, so dass dieser einen anfänglichen Registrierungsprozess in diesem Fall durchführen muss.

In einem vierten Schritt richtet der neue Zugangspunkt-Verbindungsrechner MEP eine Übertragung für den mobilen Rechner ein und leert seinen Puffer-Speicher, um einen Nachrichtenverlust während des Handover-Prozesses zu kompensieren.

In einem fünften Schritt (Schritte 5a und 5b) schreitet der Prozess fort wie im Fall der anfänglichen Registrierung.

In einem sechsten Schritt (Leave MCG) verlassen die Zugangspunkt-Verbindungsrechner MEP, welche benachbart zu dem alten MEP jedoch nicht zu dem neuen MEP sind, die Multicasting-Gruppe MCG. Weiterhin löschen sie den Eintrag mit der Vertrauensbeziehung, wenn sie das nächste Inter-MEP Advertisement des alten Zugangspunkt-Verbindungsrechners MEP empfangen, der nicht mehr mit dem mobilen Rechner in Verbindung steht.

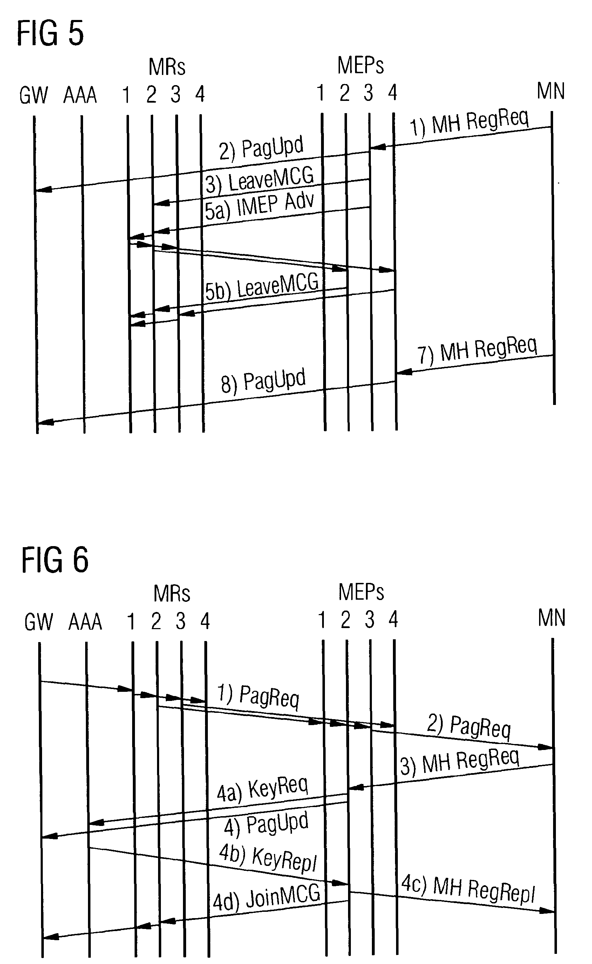

Anhand von Fig. 5 wird im folgenden ein Übergang des mobilen Rechners in den inaktiven Zustand näher beschrieben.

In einem ersten Schritt (MH RegReq) sendet der mobile Rechner einen MH Registration Request, mit einem inaktiv gesetzten Flag und authentifiziert mit der Vertrauensbeziehung SA_{MN:i,AN}, zu dem momentan zugeordneten Zugangspunkt-Verbindungsrechner MEP.

Dieser überprüft in einem zweiten Schritt (PagUpd) die Nachricht und versendet ein Paging Update mit dem entsprechenden Paging-Gebiet und dem verschlüsselten Session-Schlüssel des mobilen Rechners, authentifiziert mit der Vertrauensbeziehung SA_{GWP,MEP:i}, an den Netzwerkverbindungs-Rechner GW (Gateway Proxy).

In einem dritten Schritt (Leave MCG) verlässt der Zugangspunkt-Verbindungsrechner MEP die Multicasting-Gruppe MCG und löscht den Eintrag des mobilen Rechners.

In einem vierten Schritt überprüft der Netzwerkverbindungs-Rechner GW die Nachricht und erzeugt einen Paging-Eintrag für den mobilen Rechner.

In einem fünften Schritt (Schritte 5a, 5b) entfernen die benachbarten Zugangspunkt-Verbindungsrechner MEP den Eintrag des mobilen Rechners und verlassen die Multicasting-Gruppe MCG als Folge eines Nachrichtenverkehrs zwischen den Zugangspunkt-Verbindungsrechnern MEP.

Ein Paging-Update wird dabei wie folgt vollzogen: der mobile Rechner im Idle-Zustand frischt seinen Standort regelmäßig auf, jedoch mit niedriger Frequenz als im aktiven Zustand. Hierzu werden, wie anhand von Fig. 5 näher erläutert, folgende Schritte vollzogen:

Der mobile Rechner versendet einen MH Registration Request (MH RegReq) mit einem inaktiven Flag, authentifiziert mit der Vertrauensbeziehung SA_{MN:i,AN}. Nachdem die Zugangspunkt-Verbindungsrechner MEP nicht jeden Status betreffend eines mobilen Rechners im Idle-Zustand aufzeichnen, kann der empfangende Zugangspunkt-Verbindungsrechner MEP nicht die Gültigkeit der Nachricht überprüfen. Für solche Nachrichten könnte ein Verfahren zur Überlastkontrolle zur Anwendung kommen. Ein solches Verfahren wird beispielsweise durch so genannte Rate-based Congestion Control realisiert, um Denial-Of-Service Attacks gegen den Netzwerkverbindungs-Rechner GW abzuwehren.

In einem nächsten Schritt (PagUpd) wird die Nachricht als ein Paging-Update zu dem Netzwerkverbindungs-Rechner GW übermittelt und dort validiert. Der Paging-Eintrag in dem Netzwerkverbindungs-Rechner GW wird aktualisiert.

Ein Übergang vom inaktiven Status in den aktiven Status kann durch zwei Ereignisse ausgelöst werden: der mobile Rechner will beispielsweise Nachrichten versenden, oder Nachrichten bestimmt für den mobilen Rechner erreichen den Netzwerkverbindungs-Rechner. Im ersten Fall wird eine anfängliche Registrierung, wie oben bereits beschrieben, durch den mobilen Rechner durchgeführt, im anderen Fall wird für den mobilen Rechner durch den Netzwerkverbindungs-Rechner ein Paging-Prozess durchgeführt.

Im folgenden wird anhand von Fig. 6 ein Paging-Prozess näher beschrieben. Wenn Nachrichten für einen mobilen Rechner MN im Idle-Status ankommen, wird ein Paging-Prozess durch den Netzwerkverbindungs-Rechner GW in folgender Weise durchgeführt:

In einem ersten Schritt (PagReq)übermittelt der Netzwerkverbindungs-Rechner in einem Multicasting-Prozess Paging-Anforderungen, authentifiziert mit den Vertrauensbeziehungen SA_{MN:i,AN} und SA_{PA:i,} an das zuletzt übermittelte Paging-Gebiet.

In einem zweiten Schritt (PagReq) überprüfen alle Zugangspunkt-Verbindungsrechner MEP innerhalb des Paging-Gebiets die Paging-Anforderung, streifen den SA_{PA:i} Authentifikator ab und übermitteln die Paging-Anforderung zu den zuletzt benutzten Zugangspunkten.

In einem dritten Schritt (MH RegReq) verifiziert der mobile Rechner die Paging-Anforderung und führt eine anfängliche Registrierung durch mit einem zusätzlichen so genannten Wake-up-Flag.

In einem vierten Schritt (Schritte 4, 4a-4c) wird zusätzlich zu den Operationen bezüglich der anfänglichen Registrierung durch den Zugangspunkt-Verbindungsrechner MEP ein Paging-Update versendet, das mit der Vertrauensbeziehung SA_{GWp,MEp:i} signiert ist, mit der Lebensdauer null an den Netzwerkverbindungs-Rechner GW.

In einem fünften Schritt modifiziert der Netzwerkverbindungs-Rechner GW das Paging-Update und komplettiert den Paging-Prozess.

Das Kommunikationssystem gemäß der Erfindung ist hinsichtlich seiner sicherheitsrelevanten Architektur weiterhin dazu eingerichtet, Denial-Of-Service Attacks abzuwehren bzw. zu verhindern. Zu diesem Zweck sind der Netzwerkverbindungs-Rechner GW und der Berechtigungsüberprüfungs-Rechner AAA weiterhin dazu eingerichtet, ein Verfahren zur Überlastkontrolle durch Bereitstellung eines Kommunikationsprotokolls für die Kommunikationselemente GW, MEP, AAA und MN durchzuführen, um einen Funktionsausfall eines dieser Kommunikationselemente infolge eines Denial-Of-Service-Angriffs zu verhindern. Nachdem die Authentifikation des Benutzers, wie oben beschrieben, im Falle eines Handover-Prozesses dezentral an den Zugangspunkt-Verbindungsrechnern MEP durchgeführt wird, können Angriffe gegen den zentralen Berechtigungsüberprüfungs-Rechner AAA vermieden werden, so dass ein Funktionsausfall nur einen lokalen Effekt nach sich ziehen würde. Ein solcher könnte auch durch einfachere Vorgänge verursacht werden, wie beispielsweise durch Datenstau. Auf der anderen Seite müssen Vorgänge wie die anfängliche Registrierung, Paging-Updates während Idle-Perioden und die Wake-up-Sequenz über den Berechtigungsüberprüfungs-Rechner AAA ausgeführt werden, weil das permanente Speichern geteilter Geheimnisse an einem dezentralen Ort eine größere Verletzbarkeit für die Architektur bedeuten würde.

Um Denial-Of-Service Attacks abzuwehren, ist der Berechtigungsüberprüfungs-Rechner AAA vorteilhaft derart eingerichtet, dass er ein Verfahren zur Überlastkontrolle nach einem Token-Bucket-Verfahren durchführt. Ein Verfahren zur Überlastkontrolle (beispielsweise so genannte Rate-Based Congestion Control nach H. Ohsaki, e.a., Rate-Based Congestion Control for ATM Networks. Computer Communication Review, ACM SIGCOMM, vol. 25, no. 2, April 1995, pp. 60-72) hat dabei die Aufgabe zu verhindern, dass die von sendenden Einrichtungen übergebenen Nachrichten die Leistungsfähigkeit des Netzes überfordern. Eine diesbezügliche Methode ist der Token-Bucket-Algorithmus, eine Methode zur Verkehrsglättung mit dem Ziel, Datenverkehr mit diskontinuierlicher Verkehrscharakteristik möglichst so zu formen, dass angenähert kontinuierliche Datenströme entstehen. Token-Bucket arbeitet mit einem Zwischenspeicher (Bucket) mit begrenztem Volumen. Ein Token-Generator erzeugt mit konstanter Rate Berechtigungssymbole, die so genannten Token. Ankommende Daten werden im Bucket abgelegt. Pro Token wird eine entsprechende Menge Daten aus dem Eimer abgelassen. Wenn permanent mehr gesandt wird als vereinbart, läuft der Eimer über, d.h. dies führt dann zu Datenverlusten.

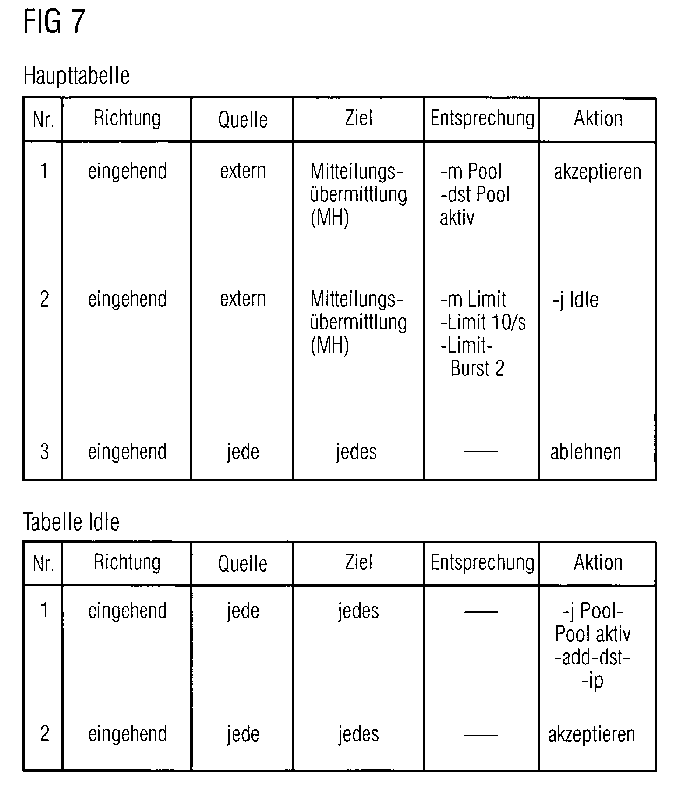

Eine solche Überlastkontrolle (Rate Control) kann erreicht werden mit der Netfilter/IP-tables-Architektur eines Standard-Linux-Kernels. In Fig. 7 ist eine Tabelle gezeigt, in der Regeln dargestellt sind, die notwendig sind, um die Zahl der Nachrichtenpakete zu begrenzen. In diesem Zusammenhang sollen Nachrichtenpakete begrenzt werden, die Paging-Anforderungen verursachen, vorzugsweise auf eine Anzahl von zehn pro Sekunde mit einer Burst-Länge von 20. Der Netfilter stellt ein Modul zur Verfügung, welches es erlaubt, IP-Adressen in einen Pool von Adressen innerhalb eines bestimmten Bereichs dynamisch einzufügen und wieder zu entfernen. Dies kann dazu benutzt werden, mobile Rechner mit Idle-Status von aktiven mobilen Rechnern zu unterscheiden. Die in Fig. 7 gezeigte Tabelle setzt einen als active Pool bezeichneten Pool voraus, der am Anfang alle Adressen mobiler Rechner beinhaltet, wobei die mobilen Rechner im Idle-Zustand vom Pool entfernt werden durch den Netzwerkverbindungs-Rechner GW.

Wenn ein eingehendes Nachrichtenpaket an den Netzwerkverbindungs-Rechner GW ankommt, wird festgestellt, ob es mit Regel Nr. 1 in der Haupttabelle übereinstimmt. Falls die Zieladresse in dem Pool active (-m pool: lade Modul Pool, -dst-pool active: suche Zieladresse im Pool active) enthalten ist, wird sie akzeptiert. Regel Nr. 2 wird nur auf Nachrichtenpakete angewandt, die an mobile Rechner im Idle-Zustand gerichtet sind. Diese Regel kann nur zehnmal pro Sekunde mit einer Burst-Länge ausgeführt werden, die dem zweifachen der Refresh-Rate entspricht, das bedeutet 20 Nachrichtenpakete (-m limit: Lade Modul limit, -limit 10/s: Begrenzung auf 10/s, -limit-burst 2: Burstlänge 20 Pakete). Falls die Regel anwendbar ist, wird der Prozess in der Tabelle Idle fortgesetzt (-j Idle). Alle anderen Nachrichtenpakete, die nicht auf Regel Nr. 1 und Regel Nr. 2 anwendbar sind, sind auf Regel Nr. 3 anwendbar und werden abgelehnt.

Regel Nr. 1 in der Tabelle Idle sorgt dafür, dass das Ziel des Nachrichtenpakets dem Pool active hinzugefügt wird (-j Pool: Führe Pool-Operation aus, -pool active -add-dst-ip: Füge Zieladresse des Pakets dem Pool active hinzu). Dies aus dem Grund, weil zusätzliche Nachrichtenpakete an dasselbe Ziel keinen weiteren Paging-Prozess auslösen, sondern in einem Ringpuffer durch den Netzwerkverbindungs-Rechner GW gepuffert werden. Deshalb können sie durch den Paketfilter in gleicher Weise behandelt werden wie Nachrichtenpakete an aktive mobile Rechner. Die Regel Nr. 2 veranlasst das Nachrichtenpaket, den Paging-Prozess auszulösen, um akzeptiert zu werden.

Operationen, die durch die Rate Control betroffen sind, sind nicht zeitkritisch. Eine anfängliche Registrierung findet im allgemeinen nur statt, wenn das Kommunikationsnetzwerk zum ersten Mal kontaktiert wird, ein Paging-Prozess im allgemeinen am Beginn der Kommunikationssitzung, und Paging-Update-Nachrichten übermitteln die Position des mobilen Rechners ohnehin nur rudimentär. Aus diesem Grund ist eine bestimmte Verzögerungszeit infolge der Überlastkontrolle auch bei hoher Netzlast akzeptabel. Natürlich werden in einem Zustand, in dem ein Denial-Of-Service Attack stattfindet, auch legitimierte Benutzer betroffen, jedoch nur hinsichtlich der Operation, die für den Angriff gerade benutzt wird. Dadurch wird ein Denial-Of-Service Attack lokal begrenzt, welcher ohne die Erfindung das gesamte Zugangsnetzwerk und die darin angemeldeten Benutzer betreffen würde. Gemäß der Erfindung wird ein solcher Angriff auf den Teil der Benutzer begrenzt, die momentan inaktiv sind, und auf Benutzer, die versuchen einen anfänglichen Registrierungsprozess durchzuführen.

## Patentansprüche

1. Kommunikationssystem zur Bereitstellung eines mobilen Telekommunikationsdienstes, das als Kommunikationselemente umfasst:
- ein Kommunikationsnetz (IN), das zur Nachrichtenübermittlung auf Basis wenigstens eines Internet-Protokolls eingerichtet ist,
- wenigstens einen mobilen Rechner (MN),
- ein Zugangsnetzwerk (AN) für den mobilen Rechner (MN), bei dem Nachrichten unter Verwendung eines Multicasting-Prozesses übermittelt werden,
- einen Netzwerkverbindungs-Rechner (GW) zur Verbindung des Zugangsnetzwerks (AN) und des Kommunikationsnetzes (IN),
- mehrere Zugangspunkte (AP) im Zugangsnetzwerk mit jeweiligen Zugangspunkt-Verbindungsrechnern (MEP), welche jeweils dazu eingerichtet sind, eine Kommunikationsverbindung zwischen wechselnden Zugangspunkten (AP) und dem mobilen Rechner (MN) herstellen zu können,
- einen Berechtigungsüberprüfungs-Rechner (AAA) zur Einrichtung und Verwaltung von Vertrauensbeziehungen (SA) zwischen mehreren der Kommunikationselemente (GW, MEP, AAA, MN),
- wobei der Netzwerkverbindungs-Rechner (GW) und die Zugangspunkt-Verbindungsrechner (MEP) dazu eingerichtet sind, beim Empfang und Versenden von Nachrichten ein Paketfilter-Verfahren zum sicherheitsbezogenen Schutz des Kommunikationssystems durchzuführen,
- wobei der Netzwerkverbindungs-Rechner (GW) und der Berechtigungsüberprüfungs-Rechner (AAA) weiterhin dazu eingerichtet sind, ein Verfahren zur Überlastkontrolle durch Bereitstellung eines Kommunikationsprotokolls für die Kommunikationselemente (GW, MEP, AAA, MN) durchzuführen, um einen Funktionsausfall eines der Kommunikationselemente infolge eines Angriffs zu verhindern.

2. Kommunikationssystem nach Anspruch 1,
**dadurch gekennzeichnet, dass**
der Netzwerkverbindungs-Rechner (GW) und die Zugangspunkt-Verbindungsrechner (MEP) dazu eingerichtet sind, ein Paketfilter-Verfahren durchzuführen, um eine vorbestimmte Klasse von Angriffen mit mutwillig veränderten Quelladressen abzuwehren.

3. Kommunikationssystem nach Anspruch 1 oder 2,
**dadurch gekennzeichnet, dass**
der Netzwerkverbindungs-Rechner (GW) und die Zugangspunkt-Verbindungsrechner (MEP) eingerichtet sind, das Paketfilter-Verfahren zum Schutz eines internen Nachrichtenaustausches im Zugangsnetzwerk (AN) vor externen Angriffen durchzuführen.

4. Kommunikationssystem nach einem der vorhergehenden Ansprüche,
**dadurch gekennzeichnet, dass**
der Berechtigungsüberprüfungs-Rechner (AAA) zur Einrichtung und Verwaltung von zumindest einer permanenten Vertrauensbeziehungen (SA) eingerichtet ist:
- zwischen jedem der Zugangspunkt-Verbindungsrechner (MEP) und dem Berechtigungsüberprüfungs-Rechner (AAA),
- zwischen dem Netzwerkverbindungs-Rechner (GW) und dem Berechtigungsüberprüfungs-Rechner (AAA),
- zwischen dem Netzwerkverbindungs-Rechner (GW) und jedem der Zugangspunkt-Verbindungsrechner (MEP),
- zwischen Zugangspunkt-Verbindungsrechnern (MEP) einer Gruppe (MCG) von Zugangspunkt-Verbindungsrechnern (MEP),
- zwischen Kommunikationselementen in einem Netzwerkgebiet (PA) eingerichtet zum Empfang eines einheitlichen Paging-Dienstes.

5. Kommunikationssystem nach einem der vorhergehenden Ansprüche,
**dadurch gekennzeichnet, dass**
der Berechtigungsüberprüfungs-Rechner (AAA) eine permanente Vertrauensbeziehung (SA) zwischen dem Berechtigungsüberprüfungs-Rechner (AAA) und dem mobilen Rechner (MN) einrichtet und verwaltet.

6. Kommunikationssystem nach einem der vorhergehenden Ansprüche,
**dadurch gekennzeichnet, dass**
der Berechtigungsüberprüfungs-Rechner (AAA) bei der anfänglichen Registrierung des mobilen Rechners (MN) eine temporäre Vertrauensbeziehung (SA) zwischen dem mobilen Rechner (MN): und zumindest einer der Kommunikationselemente (MEP, GW) des Zugangsnetzes (AN) einrichtet und verwaltet.

7. Kommunikationssystem nach einem der vorhergehenden Ansprüche,
**dadurch gekennzeichnet, dass**
der Berechtigungsüberprüfungs-Rechner (AAA) eingerichtet ist, ein Verfahren zur Überlastkontrolle nach einem Token-Bucket-Verfahren durchzuführen.

8. Verfahren zur Bereitstellung eines mobilen Telekommunikationsdienstes mittels eines Kommunikationsnetzes (IN), das zur Nachrichtenübermittlung auf Basis wenigstens eines Internet-Protokolls eingerichtet ist,
- bei dem innerhalb Zugangsnetzwerkes (AN) für mobile Rechner (MN) eine Nachricht nach einem Multicasting-Prozess übermittelt wird,
- bei dem über mehrere Zugangspunkte (AP, MEP) im über einen Netzwerkverbindungsrechner (GW) mit dem Kommunikationsnetz (IN) verbundenen Zugangsnetzwerk (AN) jeweils eine Kommunikationsverbindung zwischen dem Zugangsnetzwerk (AN) und einem mobilen Rechner (MN) hergestellt wird, der mit wechselnden Zugangspunkten (AP, MEP) im Zugangsnetzwerk (AN) kommunizieren kann,
- bei dem mit Hilfe des Berechtigungsüberprüfungs- Rechners (AAA) Vertrauensbeziehungen (SA) zwischen mehreren Kommunikationselementen (GW, MEP, AAA, MN) des Kommunikationssystems eingerichtet und verwaltet werden,
- bei dem mit Hilfe des Netzwerkverbindungsrechners (GW) und der Zugangspunkt- Verbindungsrechner (MEP) beim Empfang und Versenden von Nachrichten ein Paketfilter-Verfahren zum sicherheitsbezogenen Schutz des Kommunikationssystems an den Grenzen des Zugangsnetzwerks (AN) durchgeführt wird, und
- bei dem mit Hilfe des Netzwerkverbindungsrechners (GW) und des Berechtigungsüberprüfungs- Rechners (AAA) eine Überlastkontrolle durch Bereitstellung eines Kommunikationsprotokolls für die Kommunikationselemente (GW, MEP, AAA, MN) des Kommunikationssystems durchgeführt wird, um einen, Funktionsausfall eines der Kommunikationselemente infolge eines Angriffs zu verhindern.

9. Verfahren nach Anspruch 8,
**dadurch gekennzeichnet, dass**
ein Paketfilter-Verfahren zur Abwehr einer vorbestimmten Klasse von Angriffen mit mutwillig veränderten Quelladressen durchgeführt wird.

10. Verfahren nach Anspruch 8 oder 9,
**dadurch gekennzeichnet, dass**
das Paketfilter-Verfahren zum Schutz eines internen Nachrichtenaustausches im Zugangsnetzwerk (AN) vor externen Angriffen durchgeführt wird.

11. Verfahren nach einem der Ansprüche 8 bis 10,
**dadurch gekennzeichnet, dass**
mittels einer Schlüsselverteilung an benachbarte Kommunikationselemente eines Zugangspunktes (AP, MEP) des Zugangsnetzes (AN) einem weiteren Zugangspunkt (AP, MEP) ermöglicht wird, eine lokale Authentifikation eines mobilen Rechners (MN) bei der automatischen Nachführung einer bestehenden Nutzdatenverbindung durchzuführen.

12. Verfahren nach einem der Ansprüche 8 bis 11,
**dadurch gekennzeichnet, dass**
das Verfahren zur Überlastkontrolle bei einem anfänglichen Registrierungsprozess des mobilen Rechners (MN) und/oder bei der Durchführung oder Aktualisierung von Paging-Diensten durchgeführt wird.

13. Verfahren nach einem der Ansprüche 8 bis 12,
**dadurch gekennzeichnet, dass**
das Verfahren zur Überlastkontrolle durch eine Linux-Netzfilter-Architektur realisiert wird.

14. Verfahren nach einem der Ansprüche 8 bis 13,
**dadurch gekennzeichnet, dass**
das Verfahren zur Überlastkontrolle auf mehreren Ebenen durchgeführt wird, insbesondere dezentral auf einer Ebene von geographischen Zellen und zentral auf einer Ebene der gesamten Netzlast.

15. Verfahren nach einem der Ansprüche 8 bis 14,
**dadurch gekennzeichnet, dass**
das Verfahren zur Überlastkontrolle nach einem Token-Bucket-Verfahren durchgeführt wird.

## Claims

1. Communication system for providing a mobile telecommunication service which comprises the following as communication elements:
- a communication network (IN) which is configured to transmit messages on the basis of at least one Internet protocol;
- at least one mobile computer (MN);
- an access network (AN) for the mobile computer (MN) in which messages are transferred using a multicast process;
- a network connection computer (GW) for connecting the access network (AN) to the communication network (IN);
- a plurality of access points (AP) in the access network, each having respective access point connection computers (MEP) which are configured to be able to establish a communication connection between variable access points (AP) and the mobile computer (MN);
- an authentication verification computer (AAA) for establishing and managing trusted relationships (SA) between a plurality of the communication elements (GW, MEP, AAA, MN);
- wherein the network connection computer (GW) and the access point connection computer (MEP) are configured to execute a packet filtering method for security-related protection of the communication system when receiving and transmitting messages;
- and wherein the network connection computer (GW) and the authentication verification computer (AAA) continue to be configured to execute an overload control method by providing a communication protocol for the communication elements (GW, MEP, AAA, MN) in order to prevent a malfunction of the communication elements as a result of an attack.

2. Communication system according to claim 1,
**characterised in that**
the network connection computer (GW) and the access point connection computer (MEP) are configured to execute a packet filtering method in order to repel a predetermined class of attacks which use deliberately changed source addresses.

3. Communication system according to claim 1 or 2,
**characterised in that**
the network connection computer (GW) and the access point connection computer (MEP) are configured to execute the packet filtering method to protect an internal message exchange within the access network (AN) from external attacks.

4. The communication system according to any one of the preceding claims,
**characterised in that**
the authentication verification computer (AAA) is configured to establish and manage at least one permanent trusted relationship (SA):
- between each of the access point connection computers (MEP) and the authentication verification computer (AAA);
- between the network connection computer (GW) and the authentication verification computer (AAA),
- between the network connection computer (GW) and each of the access point connection computers (MEP),
- between the access point connection computers (MEP) of a group (MCG) of access point connection computers (MEP),
- between communication elements in a network area (PA) which are configured to receive a uniform paging service.

5. Communication system according to any one of the preceding claims,
**characterised in that**
the authentication verification computer (AAA) establishes and manages a permanent trusted relationship (SA) between the authentication verification computer (AAA) and the mobile computer (MN).

6. Communication system according to any one of the preceding claims,
**characterised in that**
during the initial registration of the mobile computer (MN) the authentication verification computer (AAA) establishes and manages a temporary trusted relationship (SA) between the mobile computer (MN) and at least one of the communication elements (MEP, GW) of the access network (AN).

7. Communication system according to any one of the preceding claims,
**characterised in that**
the authentication verification computer (AAA) is configured to execute an overload control method according to a token bucket method.

8. Method for providing a mobile telecommunication service by means of a communication network (IN) which is configured to transmit messages on the basis of at least one Internet protocol,
- wherein a message is transmitted using a multicast process within an access network (AN) for mobile computers (MN),
- wherein via a plurality of access points (AP, MEP) in the access network (AN) connected to the communication network (IN) via a network connection computer (GW) a communication connection is established in each case between the access network (AN) and a mobile computer (MN) which can communicate with variable access points (AP, MEP) in the access network (AN),
- wherein trusted relationships (SA) between a plurality of communication elements (GW, MEP, AAA, MN) of the communication system are established and managed with the aid of the authentication verification computer (AAA),
- wherein a packet filtering method for security-related protection of the communication system is executed at the boundaries of the access network (AN) when receiving and transmitting messages with the aid of the network connection computer (GW) and the access point connection computer (MEP),
- wherein an overload control is carried out with the aid of the network connection computer (GW) and the authentication verification computer (AAA) by providing a communication protocol for the communication elements (GW, MEP, AAA, MN) of the communication system in order to prevent malfunction of one of the communication elements as a result of an attack.

9. Method according to claim 8,
**characterised in that**
a packet filtering method for repelling a predetermined class of attacks using deliberately changed source addresses is executed.

10. Method according to claim 8 or 9,
**characterised in that**
the packet filtering method is executed for protection of an internal message exchange within the access network (AN) from external attacks.

11. Method according to any one of claims 8 to 10,
**characterised in that**
it is made possible, by means of a distribution of keys to adjacent communication elements of an access point (AP, MEP) of the access network (AN), for a further access point (AP, MEP) to execute local authentication of a mobile computer (MN) while automatically tracking an existing useful data connection.

12. Method according to any one of claims 8 to 11,
**characterised in that**
the overload control method is executed during an initial registration process of the mobile computer (MN) and/or while executing or updating paging services.

13. Method according to any one of claims 8 to 12,
**characterised in that**
the overload control method is implemented by a Linux net filter architecture.

14. Method according to any one of claims 8 to 13,
**characterised in that**
the overload control method is executed on a plurality of levels, in particular decentrally on a level of geographical cells and centrally on a level of the total network load.

15. Method according to any one of claims 8 to 14,
**characterised in that**
the overload control method is executed according to a token bucket method.

## Revendications

1. Système de communication destiné à fournir un service de télécommunication mobile qui, en tant qu'élément de communication, comprend :
- un réseau de communication (IN) configuré pour la transmission de messages sur la base d'au moins un protocole Internet,
- au moins un ordinateur mobile (MN),
- un réseau d'accès (AN) pour l'ordinateur mobile (MN), dans lequel des messages sont transmis en utilisant un processus de multidiffusion,
- un ordinateur de connexion de réseaux (GW) pour la connexion du réseau d'accès (AN) et du réseau de communication (IN),
- plusieurs points d'accès (AP) dans le réseau d'accès, comprenant des ordinateurs de connexion de points d'accès respectifs (MEP) qui sont chacun configurés pour pouvoir établir une liaison de communication entre des points d'accès changeants (AP) et l'ordinateur mobile (MN),
- un ordinateur de vérification d'autorisation (AAA) pour la configuration et la gestion de relations de confiance (SA) entre plusieurs des éléments de communication (GW, MEP, AAA, MN),
- l'ordinateur de connexion de réseaux (GW) et les ordinateurs de connexion de points d'accès (MEP) étant configurés pour exécuter un procédé de filtrage de paquets, lors de la réception et de l'émission de messages, pour la protection relative à la sécurité du système de communication,
- l'ordinateur de connexion de réseaux (GW) et l'ordinateur de vérification d'autorisation (AAA) étant en outre configurés pour exécuter un procédé de contrôle de surcharge par la mise à disposition d'un protocole de communication pour les éléments de communication (GW, MEP, AAA, MN) afin d'empêcher une défaillance de l'un des éléments de communication suite à une attaque.

2. Système de communication selon la revendication 1,
**caractérisé en ce que**
l'ordinateur de connexion de réseaux et les ordinateurs de connexion de points d'accès (MEP) sont configurés pour exécuter un procédé de filtrage de paquets afin de rejeter une classe prédéterminée d'attaques avec des adresses sources modifiées intentionnellement.

3. Système de communication selon la revendication 1 ou 2,
**caractérisé en ce que**
l'ordinateur de connexion de réseaux et les ordinateurs de connexion de points d'accès (MEP) sont configurés pour exécuter le procédé de filtrage de paquets destiné à la protection d'un échange interne de messages dans le réseau d'accès (AN) contre des attaques externes.

4. Système de communication selon l'une quelconque des revendications précédentes,
**caractérisé en ce que**
l'ordinateur de vérification d'autorisation (AAA) est configuré pour la configuration et la gestion d'au moins une relation de confiance permanente (SA) :
- entre chacun des ordinateurs de connexion de points d'accès (MEP) et l'ordinateur de vérification d'autorisation (AAA),
- entre l'ordinateur de connexion de réseaux (GW) et l'ordinateur de vérification d'autorisation (AAA),
- entre l'ordinateur de connexion de réseaux (GW) et chacun des ordinateurs de connexion de points d'accès (MEP),
- entre des ordinateurs de connexion de points d'accès (MEP) d'un groupe (MCG) d'ordinateurs de connexion de points d'accès (MEP),
- entre des éléments de communication dans une zone de réseau (PA), configurés pour la réception d'un service de radiomessagerie uniforme.

5. Système de communication selon l'une quelconque des revendications précédentes,
**caractérisé en ce que**
l'ordinateur de vérification d'autorisation (AAA) configure et gère une relation de confiance permanente (SA) entre l'ordinateur de vérification d'autorisation (AAA) et l'ordinateur mobile (MN).

6. Système de communication selon l'une quelconque des revendications précédentes,
**caractérisé en ce que**
l'ordinateur de vérification d'autorisation (AAA), lors de l'enregistrement initial de l'ordinateur mobile (MN), configure et gère une relation de confiance temporaire (SA) entre l'ordinateur mobile (MN) et au moins l'un des éléments de communication (MEP, GW) du réseau d'accès (AN).

7. Système de communication selon l'une quelconque des revendications précédentes,
**caractérisé en ce que**
l'ordinateur de vérification d'autorisation (AAA) est configuré pour exécuter un procédé de contrôle de surcharge selon un procédé token bucket.

8. Procédé destiné à fournir un service de télécommunication mobile au moyen d'un réseau de communication (IN), qui est configuré pour la transmission de messages sur la base d'au moins un protocole Internet,
- dans lequel, à l'intérieur du réseau d'accès (AN) pour ordinateurs mobiles (MN), un message est transmis selon un processus de multidiffusion,
- dans lequel une liaison de communication est respectivement établie entre le réseau d'accès (AN) et un ordinateur mobile (MN) par l'intermédiaire de plusieurs points d'accès (AP, MEP) dans le réseau d'accès (AN) connecté au réseau de communication (IN) par l'intermédiaire d'un ordinateur de connexion de réseaux (GW), l'ordinateur mobile pouvant communiquer avec des points d'accès changeants (AP, MEP) dans le réseau d'accès (AN),
- dans lequel des relations de confiance (SA) sont configurées et gérées entre plusieurs éléments de communication (GW, MEP, AAA, MN) du système de communication à l'aide de l'ordinateur de vérification d'autorisation (AAA),
- dans lequel un procédé de filtrage de paquets est exécuté à l'aide de l'ordinateur de connexion de réseaux (GW) et des ordinateurs de connexion de points d'accès (MEP) lors de la réception et de l'émission de messages, pour la protection relative à la sécurité du système de communication aux limites du réseau d'accès (AN) et
- dans lequel un contrôle de surcharge est exécuté à l'aide de l'ordinateur de connexion de réseaux (GW) et de l'ordinateur de vérification d'autorisation (AAA), par la mise à disposition d'un protocole de communication pour les éléments de communication (GW, MEP, AAA, MN) du système de communication afin d'empêcher une défaillance de l'un des éléments de communication suite à une attaque.

9. Système de communication selon la revendication 8,
**caractérisé en ce qu'**
un procédé de filtrage de paquets est exécuté pour rejeter une classe prédéterminée d'attaques avec des adresses sources modifiées intentionnellement.

10. Système de communication selon la revendication 8 ou 9,
**caractérisé en ce que**
le procédé de filtrage de paquets est exécuté pour la protection d'un échange interne de messages dans le réseau d'accès (AN) contre des attaques externes.

11. Système de communication selon l'une quelconque des revendications 8 à 10,
**caractérisé en ce qu'**
au moyen d'une répartition de codes à des éléments de communication voisins d'un point d'accès (AP, MEP) du réseau d'accès (AN), il est rendu possible à un autre point d'accès (AP, MEP) de réaliser une authentification locale d'un ordinateur mobile (MN) lors de la poursuite automatique d'une liaison de données utiles existante.

12. Système de communication selon l'une quelconque des revendications 8 à 11,
**caractérisé en ce que**
le procédé de contrôle de surcharge est exécuté lors d'un processus initial d'enregistrement de l'ordinateur mobile (MN) et/ou lors de l'exécution ou de la mise à jour de services de radiomessagerie.

13. Système de communication selon l'une quelconque des revendications 8 à 12,
**caractérisé en ce que**
le procédé de contrôle de surcharge est exécuté au moyen d'une architecture de filtrage de réseau Linux.

14. Système de communication selon l'une quelconque des revendications 8 à 13,
**caractérisé en ce que**
le procédé de contrôle de surcharge est exécuté sur plusieurs niveaux, notamment de manière décentralisée sur un niveau de cellules géographiques et de manière centralisée sur un niveau de la charge totale du réseau.

15. Système de communication selon l'une quelconque des revendications 8 à 14,
**caractérisé en ce que**
le procédé de contrôle de surcharge est exécuté selon un procédé token bucket.
